# EUROPÄISCHE PATENTSCHRIFT

(11) **EP 1 252 454 B1**
(45) Veröffentlichungstag und Bekanntmachung des Hinweises auf die Patenterteilung: **09.03.2005**
(21) Anmeldenummer: 01902148.4
(22) Anmeldetag: 26.01.2001
(51) Int. Cl.: F16D 13/00

(54) **NASSLAUFENDE MEHRSCHEIBENKUPPLUNG FÜR EINEN FAHRZEUGANTRIEBSSTRANG, INSBESONDERE FÜR EINE DIFFERENZDREHZAHLFÜHLENDE KUPPLUNG**
MULTIPLE DISK IN OIL BATH CLUTCH FOR A VEHICLE DRIVE TRAIN, ESPECIALLY FOR A SPEED-DIFFERENCE SENSING CLUTCH
EMBRAYAGE A DISQUES MULTIPLES A BAIN D'HUILE POUR UN ENSEMBLE TRANSMISSION DE VEHICULE, EN PARTICULIER POUR UN EMBRAYAGE SENSIBLE A LA DIFFERENCE DE VITESSE DE ROTATION

(30) Priorität: 26.01.2000 AT 200049 U
(43) Veröffentlichungstag der Anmeldung: 30.10.2002
(73) Patentinhaber: MAGNA Drivetrain AG & Co KG, 8502 Lannach (AT)
(72) Erfinder: HOFER, Manfred, A-8010 Graz (AT); KALTMANN, Siegfried, A-8047 Graz (AT)
(74) Vertreter: Kovac, Werner
(86) Internationale Anmeldenummer: PCT/AT2001/000020
(87) Internationale Veröffentlichungsnummer: WO 2001/055611

(56) Entgegenhaltungen:
- WO-A-96/23144
- US-A- 5 535 870
- US-A- 6 006 885

## Beschreibung

Die Erfindung betrifft eine nasslaufende Mehrscheibenkupplung in einem Teil eines Fahrzeugantriebes und ein Schmiermittel für diese enthaltenden Gehäuse, bestehend aus einem Antriebsglied und einem Abtriebsglied, sowie einer Anzahl mit dem Antriebsglied verbundener erster Scheiben und einer Anzahl mit dem Abtriebsglied verbundener zweiter Scheiben, die durch Betätigungsmittel zusammenpressbar sind, wie in WO-A-96/23144 offenbart.

Nasslaufende Mehrscheibenkupplungen finden in Antriebssträngen von Kraftfahrzeugen, vorwiegend in Differentialsperren, in Allradantrieben zum Zuschalten der weiteren Triebachse oder zur Veränderung der Drehmomentverteilung zwischen den Achsen Verwendung.

Bei diesen Anwendungen wirkt die Kupplung nicht einfach als aus- und einrückbare Schaltkupplung, sondern als Steuerkupplung wobei sie auch länger unter Schlupf arbeitet. Dabei treten, bisweilen erst im Lauf der Lebensdauer, Schwingungen auf, die als tiefes Brummen ("moaning") bis hochfrequentes Knarren wahrgenommen werden. Abgesehen davon, daß dieses Geräusch stört, verkürzen solche Schwingungen die Lebensdauer.

Die Ursache dieser Schwingungen ist wahrscheinlich ein negativer Gradient des Reibungskoeffizienten. Unter diesem Gradienten wird die Abnahme des Reibungskoeffizienten zwischen ersten und zweiten Scheiben bei zunehmender Drehzahldifferenz verstanden. Anfänglich ist das der Übergang von Haftreibung zu Gleitreibung mit geringerem Gleit-Reibungskoeffizienten; bei weiterer Zunahme der Drehzahldifferenz kann der Reibungskoeffizient weiter abfallen.

Daher trachtete man danach, ein Tribosystem zu schaffen, in dem der Gradient des Reibungskoeffizienten, zumindest bereichsweise, positiv oder wenigstens nicht negativ ist. Es ist bekannt, dazu Scheibenpaarungen zu wählen, bei denen die Scheiben aus Stahlblech bestehen und die ersten Scheiben mit einem Sinterbelag in bestimmten Oberflächenmustern versehen sind. Es ist auch bekannt, für nasse Kupplungen besonders geeignete Flüssigkeiten einzusetzen, wie etwa in automatischen Getrieben.

Es hat sich aber gezeigt, dass auch solche Tribosysteme die beschriebenen Schwingungen nicht mit Sicherheit verhindern können, zumindest nicht nach einer gewissen Betriebsdauer, sodass die Scheiben bald ausgetauscht werden mussten. Das aber ist vor allem bei im Fahrzeugantrieb integrierten Kupplungen nachteilig, weil ein Auswechseln der Scheiben meist besonders arbeitsaufwendig ist.

Bei der Anwendung solcher Kupplungen in Gehäusen, in denen auch andere Antriebsteile untergebracht sind, kommt als weitere Erschwernis dazu, dass die Antriebsteile Öle mit besonderen Schmiereigenschaften erfordern, zum Beispiel Hypoidöle, die aber für Kupplungen weniger günstig sind.

Es ist daher Ziel der Erfindung, ein Tribosystem für Reibungskupplungen vorzuschlagen, das das Auftreten von Schwingungen auch unter den beschriebenen ungünstigen Bedingungen sicher und für die ganze Lebensdauer hintanhält.

Erfindungsgemäß wird das dadurch erreicht, dass die ersten Scheiben aus Stahl sind und an ihren Reibflächen Beläge aus in eine Kohlenstoffmatrix gebetteten Kohlenstofffasern haben, welche Beläge von von innen nach aussen führenden Kanälen unterbrochen sind, und dass die zweiten Scheiben aus Stahl bestehen und ihre Reibflächen mit einer Nickel-Dispersionsschicht versehen sind.

In umfangreichen Versuchen konnte dieses das gestellte Problem lösende Tribosystem ermittelt werden. Weiters wurde festgestellt, dass die Nickel-Dispersionsschicht besonders wirksam ist, wenn sie eine kristalline Struktur aufweist, und wenn sie weiters 2 bis 5 Volumsprozent Titannitrid in gleichmäßiger Verteilung enthält.

Im folgenden wird die Erfindung anhand von Figuren beschrieben und erläutert. Es stellen dar:
- Fig. 1:: Einen Längsschnitt durch eine Antriebskomponente, in der die Erfindung beispielsweise anwendbar ist,
- Fig. 2:: eine Draufsicht auf die erfindungsgemäßen ersten Scheiben,
- Fig. 3:: eine Draufsicht auf die erfindungsgemäßen zweiten Scheiben.

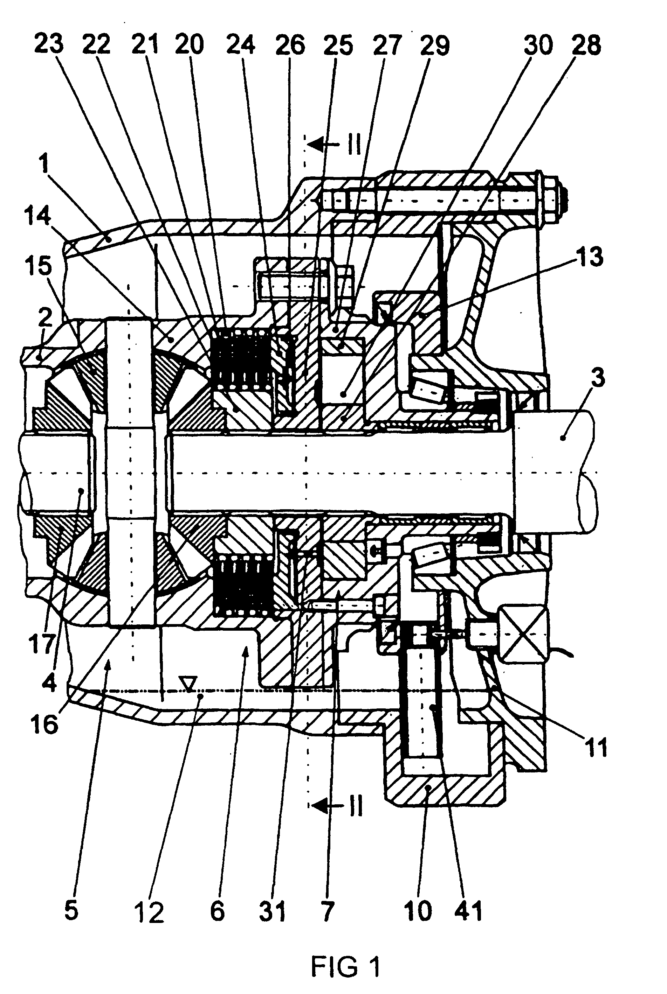

In der Figur 1 ist das stationäre Gehäuse der Antriebseinheit mit 1 bezeichnet. Ein Antriebsgehäuse 2 wird von einer nicht dargestellten Kraftquelle aus angetrieben. Eine erste Ausgangswelle 3 und eine zweite Ausgangswelle 4 sind mit den beiden Rädern einer Achse eines Fahrzeuges beziehungsweise mit zwei Achsen eines Fahrzeuges antriebsverbunden, was nicht dargestellt ist. Die beiden Ausgangswellen 3,4 werden von dem Antriebsgehäuse 2 über ein Differentialgetriebe 5 angetrieben. Weiters ist eine differenzdrehzahlabhängige hydraulische Kupplung zwischen dem Antriebsgehäuse 2 und der ersten Ausgangswelle 3 vorgesehen, die aus einer Reibungskupplung 6 und aus einer hydrostatischen Verdrängungsmaschine 7 besteht.

Das Gehäuse 1 ist nur angedeutet. Es ist mit einem Sumpfring 10 und einem Lagerschild 11 verschraubt. In dem Gehäuse befindet sich ein Ölsumpf 12. Am Lagerschild 11 sitzt innen ein Dichtungstragring 13. Das Differentialgetriebe 5 besteht aus einem einen Teil des Antriebsgehäuses 2 bildenden Differentialgehäuse 14, Ausgleichsrädem 15 mit ihrer Welle, einem ersten Abtriebskegelrad 16, das mit der ersten Ausgangswelle 3 fest verbunden ist und einem zweiten Abtriebskegelrad 17, das mit der zweiten Ausgangswelle 4 fest verbunden ist.

Die Reibungskupplung 6 ist ebenfalls im Differentialgehäuse 14 untergebracht, in dessen inneren Kuppelzähnen 20 zweite Scheiben (Außenlamellen) 21 drehfest aber axial verschiebbar angeordnet sind. Erste Scheiben (Innenlamellen) 22 sitzen drehfest auf einem Kupplungsinnenteil 23, das mit dem ersten Abtriebskegelrad 16 drehfest verbunden ist. Weiters gehört zur Reibungskupplung 6 noch ein Kolben 24, der einerseits Druck auf die Lamellen 21,22 ausübt und andererseits mit einer im Differentialgehäuse 14 befestigten Ventilplatte 25 eine Druckkammer 26 bildet.

Die Verdrängungsmaschine 7 ist in einem mit dem Differentialgehäuse 14 verschraubten Pumpengehäuse 27 untergebracht und besteht im wesentlichen aus einem mit der ersten Ausgangswelle 3 drehfest verbundenen Innenrotor 28 und aus einem exzentrischen Außenrotor 29, der im Pumpengehäuse 27 drehbar ist. Zwischen den beiden Rotoren 28,29 ist ein Arbeitsraum 30 gebildet, dessen Form von der Bauart der Verdrängungsmaschine bestimmt wird. Von dem Arbeitsraum 30 führt mindestens ein Druckkanal in den Druckraum 26 der Reibungskupplung, wobei je nach Bauart der Verdrängungsmaschine mehrere Druckkanäle mit entsprechenden selbststeuernden Vorrichtungen vorgesehen sein können.

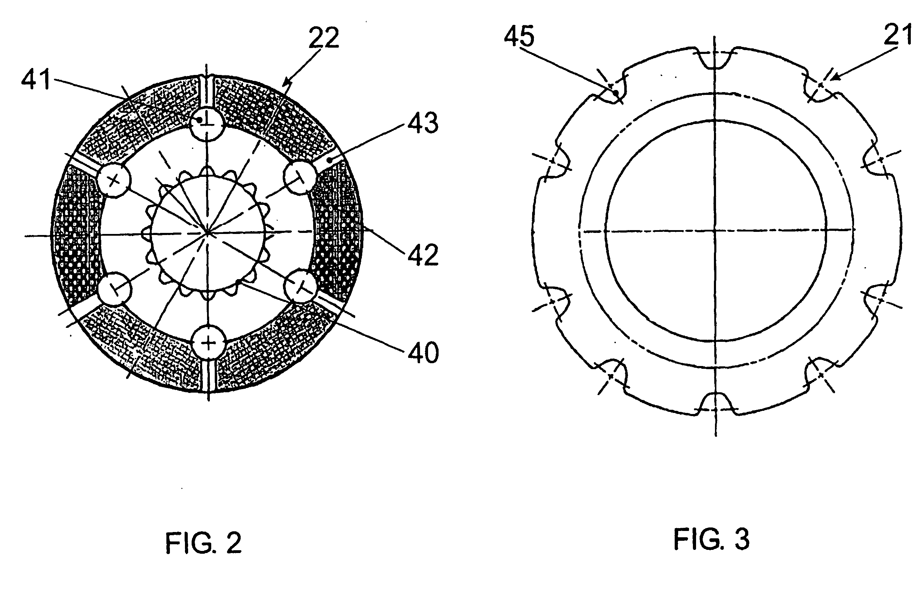

In Fig.2 ist eine der ersten Scheiben (Innenlamellen) dargestellt und insgesamt mit 22 bezeichnet. Sie ist eine Stahlscheibe von beispielsweise einem Millimeter Dicke, kreisringförmig mit Kuppelzähnen 40 an ihrem inneren Rand und am Umfang verteilten Löchern 41. Sie besitzt an beiden Seiten über den Umfang gleichmäßig verteilte Beläge 42 mit radialen Kanälen 43. Die Beläge bestehen aus Kohlenstofffasern, die ein Geflecht bilden können und in einer Matrix aus Kohlenstoff eingelagert sind. Die Herstellung erfolgt zweckmäßigerweise im CVD-(Chemical-Vapour-Deposition) Verfahren. Die Beläge 42 sind auf die Stahlscheibe aufgeklebt, ihre Dicke beträgt ungefähr die Hälfte derer der Stahlscheibe.

In Fig.3 sind die zweiten Scheiben (Außenlamellen) insgesamt mit 21 bezeichnet. Sie sind Stahlscheiben mit einer Nickel-Dispersionsschicht auf der gesamten Oberfläche, also auf beiden Seiten. Die Nickel-Dispersionsschicht wird vorzugsweise galvanisch aufgebracht. Die Dicke der Schicht liegt im Bereich zwischen 5 und 25 Mikrometer, ihre Härte liegt im Bereich zwischen 400 und 600 HV (Vickers-Härte). Die Nickel-Dispersionsschicht kann zur weiteren Verbesserung ihrer Eigenschaften ebenso fein verteilt Titannitride enthalten. Im beschriebenen Ausführungsbeispiel liegt ihr Anteil zwischen 2 und 5 % Volumen (Volumsprozent). Beim Aufbringen der Dispersionsschicht soll laminare Abscheidung vermieden werden, die besten Eigenschaften werden bei kristalliner Abscheidung erreicht. Zur weiteren Verbesserung kann in der Nickel-Dispersionsschicht Nickel teilweise durch Kobalt ersetzt sein, bis zu einem Verhältnis von 70 % Nickel und 30 % Kobalt. An ihrem äußeren Umfang besitzen die zweiten Scheiben 21 Kuppelzähne 45.

Mit dem beschriebenen Tribosystem wird der erwünschte positive Gradient des Reibungskoeffizienten erreicht, und damit die angestrebte Vibrations- und Geräuschfreiheit, auch bei sehr langer Betriebsdauer.

## Patentansprüche

1. Nasslaufende Mehrscheibenkupplung in einem Teil eines Fahrzeugantriebes und ein Schmiermittel für diese enthaltenden Gehäuse, bestehend aus einem Antriebsglied (2) und einem Abtriebsglied (3), sowie einer Anzahl mit dem Antriebsglied (2) bzw dem Abtriebsglied (3) verbundener erster Scheiben (22) und zweiter Scheiben (21), die durch Betätigungsmittel (24) zusammenpressbar sind, **dadurch gekennzeichnet, dass**
a) die ersten Scheiben (22) aus Stahl sind und ihre Reibflächen Beläge (42) aus in eine Kohlenstoffmatrix gebetteten Kohlenstofffasern, die von von innen nach aussen führenden Kanälen (43) unterbrochen sind, und
b) die zweiten Scheiben (21) aus Stahl bestehen und ihre Reibflächen mit einer Nickel-Dispersionsschicht versehen sind.

2. Nasslaufende Mehrscheibenkupplung nach Anspruch 1, **dadurch gekennzeichnet, dass** die Nickel-Dispersionsschicht eine zumindest teilweise kristalline Struktur aufweist.

3. Nasslaufende Mehrscheibenkupplung nach Anspruch 1, **dadurch gekennzeichnet, dass** die Nickel-Dispersionsschicht der zweiten Scheiben 21 2 % bis 5 % Volumen Titannitrid in gleichmäßiger Verteilung enthält.

4. Nasslaufende Mehrscheibenkupplung nach Anspruch 1, **dadurch gekennzeichnet, dass** die Nickel-Dispersionsschicht der zweiten Scheiben 21 10 % bis 35 % Volumen Kobalt in gleichmäßiger Verteilung enthält.

5. Differenzdrehzahlfühlende Kupplung mit einer nasslaufenden Mehrscheibenkupplung (6) nach einem der Ansprüche 1 bis 4.

## Claims

1. A wet multi-disk clutch in part of a vehicle drive and a lubricant for a housing containing said clutch, comprising an input member (2) and an output member (3), and a number of first disks (22) and second disks (21), which are connected to the input member (2) and the output member (3) respectively and can be pressed together by actuating means (24), wherein
a) the first disks (22) are composed of steel and their friction faces are linings (42) composed of carbon fibers embedded in a carbon matrix, which are interrupted by channels (43) leading from the inside outward, and
b) the second disks (21) are composed of steel and their friction faces are provided with a nickel dispersion layer.

2. The wet multi-disk clutch as claimed in claim 1, wherein the nickel dispersion layer has an at least partially crystalline structure.

3. The wet multi-disk clutch as claimed in claim 1, wherein the nickel dispersion layer of the second disks (21) contains 2% to 5% by volume of uniformly dispersed titanium nitride.

4. The wet multi-disk clutch as claimed in claim 1, wherein the nickel dispersion layer of the second disks (21) contains 10% to 35% by volume of uniformly dispersed cobalt.

5. A coupling that senses a differential rotational speed and has a wet multi-disk clutch (6) as claimed in any of claims 1 to 4.

## Revendications

1. Embrayage multi-disques à bain d'huile dans une partie d'une transmission pour véhicule automobile et un lubrifiant pour un carter contenant celui-ci, formé par un organe d'entrée de transmission (2) et un organe de sortie de transmission (3), ainsi qu'un certain nombre de premiers disques (22) et de seconds disques (21) qui sont reliés respectivement à l'organe d'entrée de transmission (2) et à l'organe de sortie de transmission (3), et qui peuvent être pressés les uns contre les autres par des moyens de commande (24),
**caractérisé en ce que**
a) les premiers disques (22) sont en acier et les revêtements (42) de leurs faces de friction sont en fibres de carbone enrobées dans une matrice en carbone, qui sont interrompues par des canaux (48) qui assurent un écoulement de l'intérieur vers l'extérieur, et
b) les seconds disques (21) sont en acier et leurs faces de friction sont revêtues d'une couche de dispersion de nickel.

2. Embrayage multi-disques à bain d'huile selon la revendication 1, **caractérisé en ce que** la couche de dispersion de nickel comporte une structure au moins partiellement cristalline.

3. Embrayage multi-disques à bain d'huile selon la revendication 1, **caractérisé en ce que** la couche de dispersion de nickel des seconds disques (21) contient de 2 % à 5 % en volume de nitrure de titane en répartition homogène.

4. Embrayage multi-disques à bain d'huile selon la revendication 1, **caractérisé en ce que** la couche de dispersion de nickel des seconds disques (21) contient de 10 % à 35 % en volume de cobalt en répartition homogène.

5. Embrayage sensible à la différence de régime avec un embrayage multi-disques (6) travaillant dans un bain d'huile selon l'une quelconque des revendications 1 à 4.
